# EUROPEAN PATENT APPLICATION

(11) **EP 4 382 633 A1**
(43) Date of publication of application: **12.06.2024**
(21) Application number: 22867248.1
(22) Date of filing: 30.08.2022
(51) Int. Cl.: C23C 22/48, C23C 28/00

(54) **AQUEOUS SURFACE TREATMENT AGENT AND SURFACE-TREATED METAL**

(30) Priority: 09.09.2021 JP 2021147069
(71) Applicant: Nippon Paint Surf Chemicals Co., Ltd., Shinagawa-ku Tokyo 140-8675 (JP)
(72) Inventor: SASAKI, Shota, Tokyo 140-8675 (JP); WADA, Yuko, Tokyo 140-8675 (JP); UTSUNOMIYA, Akira, Tokyo 140-8675 (JP); MATSUI, Norizumi, Tokyo 140-8675 (JP)
(74) Representative: Herzog IP Patentanwalts GmbH
(86) International application number: PCT/JP2022/032532
(87) International publication number: WO 2023/037926

(57) **Abstract**

The present invention provides an aqueous surface treatment agent which is used for surface treatment of a metal, and contains (A) a trivalent chromium compound and (B) a water-soluble or water-dispersible acrylic resin. With respect to this aqueous surface treatment agent, the water-soluble or water-dispersible acrylic resin (B) has a solid acid value of 150 mgKOH/g to 740 mgKOH/g and a solid hydroxyl value of 24 mgKOH/g to 350 mgKOH/g; and the ratio of the mass of trivalent chromium contained in the trivalent chromium compound (A) to the mass of the solid content of the water-soluble or water-dispersible acrylic resin (B) is 0.07 to 2.8.

## Description

### TECHNICAL FIELD

The present invention relates to an aqueous surface treatment agent and a surface-treated metal.

### BACKGROUND ART

Conventionally, metals have been subjected to lamination processing by adhering laminate films to the metals in order to protect the metals and to create designs on the metals.

In order to maintain a favorable appearance and corrosion resistance of a laminated metal, it is important to improve the adhesion of the laminate film. In a known example of a method therefor, aluminum or an aluminum alloy is treated with a pretreatment agent (see Patent Document 1). The pretreatment agent in this case includes a water-soluble zirconium compound, a water-soluble or water-dispersible acrylic resin, and a water-soluble or water-dispersible thermosetting cross-linking agent.

On the other hand, laminate films have excellent processability, corrosion resistance, barrier properties, and the like, and moreover, produce less volatile organic compounds during lamination processing of metals. Therefore, laminated metals have been applied to, for example, exterior materials for batteries.

### Citation List

### Patent Document

Patent Document 1: Japanese Unexamined Patent Application, Publication No. 2002-265821

### DISCLOSURE OF THE INVENTION

### Problems to be Solved by the Invention

In such application of laminated metals to exterior materials for batteries, improvement of the electrolyte resistance has been desired.

An object of the present invention is to provide an aqueous surface treatment agent capable of improving the electrolyte resistance of a metal in cases where the metal is subjected to lamination processing.

### Means for Solving the Problems

One aspect of the present invention is an aqueous surface treatment agent for use in surface treatment of a metal, the agent including: a trivalent chromium compound (A) and a water-soluble or water-dispersible acrylic resin (B), the water-soluble or water-dispersible acrylic resin (B) having a solid acid value of 150 mg KOH/g or more and 740 mg KOH/g or less and a solid hydroxyl value of 24 mg KOH/g or more and 350 mg KOH/g or less, the ratio of the mass of the trivalent chromium contained in the trivalent chromium compound (A) to the mass of the solid content of the water-soluble or water-dispersible acrylic resin (B) being 0.07 or more and 2.8 or less.

The water-soluble or water-dispersible acrylic resin (B) may be a copolymer obtained by copolymerizing monomers containing one or more functional groups selected from the group consisting of a glycidyl group, an amide group, an alkoxysilyl group, and a phosphate group.

The aqueous surface treatment agent may also include an organic chelating agent (C).

The organic chelating agent (C) may include one or more functional groups selected from the group consisting of a hydroxyl group, a carboxyl group, a phosphonate group, a phosphate group, and an amino group.

Another aspect of the present invention is a surface-treated metal, including: a metal and a coating film formed by surface treatment of the metal with the aqueous surface treatment agent.

The metal may be aluminum or an aluminum alloy, iron or an iron alloy, or copper or a copper alloy.

The metal may be plated.

The metal having the coating film in the surface-treated metal may be laminated.

The surface-treated metal may be an exterior material for a battery.

### Effects of the Invention

According to the present invention, an aqueous surface treatment agent capable of improving the electrolyte resistance of a metal in cases where the metal is subjected to lamination processing can be provided.

### PREFERRED MODE FOR CARRYING OUT THE INVENTION

Embodiments of the present invention are described below.

### [Aqueous Surface Treatment Agent]

An aqueous surface treatment agent of the present embodiment is used for surface treatment of metals.

Examples of the metals include, but are not limited to, iron, zinc, aluminum, copper, and nickel. Two or more of these may be used in combination. Thus, examples of the metals also include alloys. Examples of the components of the alloys include carbon, nitrogen, oxygen, phosphorus, sulfur, silicon, manganese, chromium, titanium, and molybdenum. Among them, aluminum or an aluminum alloy, iron or an iron alloy, or copper or a copper alloy is preferred from the viewpoint of the processability and the adhesion. Aluminum or an aluminum alloy is more preferred. Examples of the aluminum alloy include Al-Cu alloys, Al-Mn alloys, Al-Si alloys, Al-Mg alloys, Al-Mg-Si alloys, Al-Zn-Mg alloys, and aluminum die cast materials (ADC materials). In cases where the later-mentioned surface-treated metal of the present embodiment is used as an exterior material for a battery, the 8079 material or the like is preferably used as the aluminum alloy. Examples of aluminum alloys applicable to other uses include the 3004 material, the 3104 material, the 3005 material, and the like for the bodies of beverage/food cans; the 5052 material, the 5182 material, and the like for lid materials for beverage/food cans; the 1050 material, the 1100 material, the 1200 material, and the like for dry cell containers; and the 8021 material and the like for electrode materials. Examples of the iron alloy include cold-rolled steel plates such as SPCC, SPCD, and SPCE; and stainless steels (SUS). Examples of the SUS include austenitic stainless steels such as SUS304, SUS301, and SUS316; ferritic stainless steels such as SUS430; and martensitic stainless steels such as SUS410. Examples of the zinc alloy include Zn-Al alloys. Examples of the copper alloy include brass. Examples of the nickel alloy include Ni-P alloys.

The metals (including alloys) may be plated. Examples of the plating species include metals such as nickel, zinc, chromium, iron, tin, copper, silver, platinum, and gold. Two or more metals may be used in combination. Examples of the plating method include electroplating, electroless plating, hot-dip plating, vacuum deposition, sputtering, and ion plating. Examples of the plated metal include Ni-plated steel materials, Ni-plated copper materials, Zn-plated steel materials, and Zn-Ni-plated steel materials. Examples of the metal (base material) to be subjected to the plating include cold-rolled steel plates such as SPCC, SPCD, and SPCE; and copper plates.

The aqueous surface treatment agent of the present embodiment includes a trivalent chromium compound (A) and a water-soluble or water-dispersible acrylic resin (B). The aqueous surface treatment agent of the present embodiment is preferably a hexavalent-chromium-free aqueous surface treatment agent, which contains no hexavalent chromium compound.

The water-soluble or water-dispersible acrylic resin (B) preferably has a solid acid value of 150 mg KOH/g to 740 mg KOH/g, preferably 380 mg KOH/g to 700 mg KOH/g. When the water-soluble or water-dispersible acrylic resin (B) has a solid acid value of less than 150 mg KOH/g, the electrolyte resistance decreases in cases where the metal is subjected to lamination processing, while when the solid acid value exceeds 740 mg KOH/g, the electrolyte resistance decreases in cases where the metal is subjected to lamination processing, and moreover, the later-described solid hydroxyl value cannot be obtained. In one embodiment, the water-soluble or water-dispersible acrylic resin (B) has a solid acid value of not less than 150 mg KOH/g, not less than 160 mg KOH/g, not less than 170 mg KOH/g, not less than 180 mg KOH/g, not less than 190 mg KOH/g, not less than 200 mg KOH/g, not less than 210 mg KOH/g, not less than 220 mg KOH/g, not less than 230 mg KOH/g, not less than 240 mg KOH/g, not less than 250 mg KOH/g, not less than 260 mg KOH/g, not less than 270 mg KOH/g, not less than 280 mg KOH/g, not less than 290 mg KOH/g, not less than 300 mg KOH/g, not less than 310 mg KOH/g, not less than 320 mg KOH/g, not less than 330 mg KOH/g, not less than 340 mg KOH/g, not less than 350 mg KOH/g, not less than 360 mg KOH/g, not less than 370 mg KOH/g, not less than 380 mg KOH/g, not less than 390 mg KOH/g, not less than 400 mg KOH/g, not less than 410 mg KOH/g, not less than 420 mg KOH/g, not less than 430 mg KOH/g, not less than 440 mg KOH/g, not less than 450 mg KOH/g, not less than 460 mg KOH/g, not less than 470 mg KOH/g, not less than 480 mg KOH/g, not less than 490 mg KOH/g, not less than 500 mg KOH/g, not less than 510 mg KOH/g, not less than 520 mg KOH/g, not less than 530 mg KOH/g, not less than 540 mg KOH/g, not less than 550 mg KOH/g, not less than 560 mg KOH/g, not less than 570 mg KOH/g, not less than 580 mg KOH/g, not less than 590 mg KOH/g, not less than 600 mg KOH/g, not less than 610 mg KOH/g, not less than 620 mg KOH/g, not less than 630 mg KOH/g, not less than 640 mg KOH/g, not less than 650 mg KOH/g, not less than 660 mg KOH/g, not less than 670 mg KOH/g, not less than 680 mg KOH/g, not less than 690 mg KOH/g, not less than 700 mg KOH/g, not less than 710 mg KOH/g, not less than 720 mg KOH/g, or not less than 730 mg KOH/g. In another embodiment, the water-soluble or water-dispersible acrylic resin (B) has a solid acid value of not more than 740 mg KOH/g, not more than 730 mg KOH/g, not more than 720 mg KOH/g, not more than 710 mg KOH/g, not more than 700 mg KOH/g, not more than 690 mg KOH/g, not more than 680 mg KOH/g, not more than 670 mg KOH/g, not more than 660 mg KOH/g, not more than 650 mg KOH/g, not more than 640 mg KOH/g, not more than 630 mg KOH/g, not more than 620 mg KOH/g, not more than 610 mg KOH/g, not more than 600 mg KOH/g, not more than 590 mg KOH/g, not more than 580 mg KOH/g, not more than 570 mg KOH/g, not more than 560 mg KOH/g, not more than 550 mg KOH/g, not more than 540 mg KOH/g, not more than 530 mg KOH/g, not more than 520 mg KOH/g, not more than 510 mg KOH/g, not more than 500 mg KOH/g, not more than 490 mg KOH/g, not more than 480 mg KOH/g, not more than 470 mg KOH/g, not more than 460 mg KOH/g, not more than 450 mg KOH/g, not more than 440 mg KOH/g, not more than 430 mg KOH/g, not more than 420 mg KOH/g, not more than 410 mg KOH/g, not more than 400 mg KOH/g, not more than 390 mg KOH/g, not more than 380 mg KOH/g, not more than 370 mg KOH/g, not more than 360 mg KOH/g, not more than 350 mg KOH/g, not more than 340 mg KOH/g, not more than 330 mg KOH/g, not more than 320 mg KOH/g, not more than 310 mg KOH/g, not more than 300 mg KOH/g, not more than 290 mg KOH/g, not more than 280 mg KOH/g, not more than 270 mg KOH/g, not more than 260 mg KOH/g, not more than 250 mg KOH/g, not more than 240 mg KOH/g, not more than 230 mg KOH/g, not more than 220 mg KOH/g, not more than 210 mg KOH/g, not more than 200 mg KOH/g, not more than 190 mg KOH/g, not more than 180 mg KOH/g, not more than 170 mg KOH/g, or not more than 160 mg KOH/g.

In the present description and claims, the solid acid value of the water-soluble or water-dispersible acrylic resin (B) is a theoretical solid acid value determined by calculating the amount [mg] of potassium hydroxide required for neutralization of the acid groups contained in 1 g of solid content of the water-soluble or water-dispersible acrylic resin (B), based on the feed ratio of each kind of monomers constituting the monomer composition used for the polymerization. The solid acid value (theoretical solid acid value) of the water-soluble or water-dispersible acrylic resin (B) is calculated according to the following equation. Theoretical solid acid value (mg KOH/g) = the number of moles (mol) of acid groups in the monomer composition fed × 56.11 (the molecular weight of potassium hydroxide; g/mol) × 1000 / the weight (g) of the monomer composition fed Thus, the solid acid value of the water-soluble or water-dispersible acrylic resin (B) can be controlled to a desired value by adjusting the feed ratio of each kind of monomers constituting the monomer composition used for the polymerization.

The water-soluble or water-dispersible acrylic resin (B) preferably has a solid hydroxyl value of 24 mg KOH/g to 350 mg KOH/g, preferably 43 mg KOH/g to 220 mg KOH/g. When the water-soluble or water-dispersible acrylic resin (B) has a solid hydroxyl value of less than 24 mg KOH/g, the electrolyte resistance decreases in cases where the metal is subjected to lamination processing, while when the solid hydroxyl value exceeds 350 mg KOH/g, the electrolyte resistance decreases in cases where the metal is subjected to lamination processing, and moreover, the storage stability of the water-soluble or water-dispersible acrylic resin (B) decreases. In one embodiment, the water-soluble or water-dispersible acrylic resin (B) has a solid hydroxyl value of not less than 24 mg KOH/g, not less than 30 mg KOH/g, not less than 40 mg KOH/g, not less than 50 mg KOH/g, not less than 60 mg KOH/g, not less than 70 mg KOH/g, not less than 80 mg KOH/g, not less than 90 mg KOH/g, not less than 100 mg KOH/g, not less than 110 mg KOH/g, not less than 120 mg KOH/g, not less than 130 mg KOH/g, not less than 140 mg KOH/g, not less than 150 mg KOH/g, not less than 160 mg KOH/g, not less than 170 mg KOH/g, not less than 180 mg KOH/g, not less than 190 mg KOH/g, not less than 200 mg KOH/g, or not less than 210 mg KOH/g. In another embodiment, the water-soluble or water-dispersible acrylic resin (B) has a solid hydroxyl value of not more than 220 mg KOH/g, not more than 210 mg KOH/g, not more than 200 mg KOH/g, not more than 190 mg KOH/g, not more than 180 mg KOH/g, not more than 170 mg KOH/g, not more than 160 mg KOH/g, not more than 150 mg KOH/g, not more than 140 mg KOH/g, not more than 130 mg KOH/g, not more than 120 mg KOH/g, not more than 110 mg KOH/g, not more than 100 mg KOH/g, not more than 90 mg KOH/g, not more than 80 mg KOH/g, not more than 70 mg KOH/g, not more than 60 mg KOH/g, not more than 50 mg KOH/g, not more than 40 mg KOH/g, or not more than 30 mg KOH/g.

In the present description and claims, the solid hydroxyl value of the water-soluble or water-dispersible acrylic resin (B) is a theoretical solid hydroxyl value determined by assuming acetylation of the free hydroxyl groups contained in 1 g of solid content of the water-soluble or water-dispersible acrylic resin (B) and calculating the amount [mg] of potassium hydroxide required for neutralization of the acetic acid bound to the hydroxyl groups, based on the feed ratio of each kind of monomers constituting the monomer composition used for the polymerization. The solid hydroxyl value (theoretical solid hydroxyl value) of the water-soluble or water-dispersible acrylic resin (B) is calculated according to the following equation. Theoretical solid hydroxyl value (mg KOH/g) = the number of moles (mol) of hydroxyl groups in the monomer composition fed × 56.11 (the molecular weight of potassium hydroxide; g/mol) × 1000 / the weight (g) of the monomer composition fed Thus, the solid hydroxyl value of the water-soluble or water-dispersible acrylic resin (B) can be controlled to a desired value by adjusting the feed ratio of each kind of monomers constituting the monomer composition used for the polymerization.

The ratio of the mass of the trivalent chromium contained in the trivalent chromium compound (A) to the mass of the solid content of the water-soluble or water-dispersible acrylic resin (B) is 0.07 to 2.8, preferably 0.12 to 2.54. When the ratio of the mass of the trivalent chromium contained in the trivalent chromium compound (A) to the mass of the solid content of the water-soluble or water-dispersible acrylic resin (B) is less than 0.07 or more than 2.8, the electrolyte resistance decreases in cases where the metal is subjected to lamination processing. In one embodiment, the ratio of the mass of the trivalent chromium contained in the trivalent chromium compound (A) to the mass of the solid content of the water-soluble or water-dispersible acrylic resin (B) is not less than 0.07, not less than 0.1, not less than 0.2, not less than 0.3, not less than 0.4, not less than 0.5, not less than 0.6, not less than 0.7, not less than 0.8, not less than 0.9, not less than 1.0, not less than 1.1, not less than 1.2, not less than 1.3, not less than 1.4, not less than 1.5, not less than 1.6, not less than 1.7, not less than 1.8, not less than 1.9, not less than 2.0, not less than 2.1, not less than 2.2, not less than 2.3, not less than 2.4, not less than 2.5, not less than 2.6, or not less than 2.7. In another embodiment, the ratio of the mass of the trivalent chromium contained in the trivalent chromium compound (A) to the mass of the solid content of the water-soluble or water-dispersible acrylic resin (B) is not more than 2.8, not more than 2.7, not more than 2.6, not more than 2.5, not more than 2.4, not more than 2.3, not more than 2.2, not more than 2.1, not more than 2.0, not more than 1.9, not more than 1.8, not more than 1.7, not more than 1.6, not more than 1.5, not more than 1.4, not more than 1.3, not more than 1.2, not more than 1.1, not more than 1.0, not more than 0.9, not more than 0.8, not more than 0.7, not more than 0.6, not more than 0.5, not more than 0.4, not more than 0.3, not more than 0.2, or not more than 0.1.

Examples of the trivalent chromium compound (A) include, but are not limited to, chromium (III) fluoride, chromium (III) nitrate, chromium (III) phosphate, chromium (III) acetate, chromium (III) chloride, chromium (III) sulfate, chromium (III) oxalate, chromium (III) formate, chromium (III) hydroxide, chromium (III) oxide, chromium (III) bromide, and chromium (III) iodide.

The content of the trivalent chromium contained in the trivalent chromium compound (A) in the aqueous surface treatment agent of the present embodiment is not limited, and is, for example, 500 ppm by mass to 60,000 ppm by mass. In one embodiment, the content of the trivalent chromium contained in the trivalent chromium compound (A) in the aqueous surface treatment agent of the present embodiment is not less than 1,000 ppm by mass, not less than 1,500 ppm by mass, not less than 2,000 ppm by mass, not less than 2,500 ppm by mass, not less than 3,000 ppm by mass, not less than 3,500 ppm by mass, not less than 4,000 ppm by mass, not less than 4,500 ppm by mass, not less than 5,000 ppm by mass, not less than 5,500 ppm by mass, not less than 6,000 ppm by mass, not less than 6,500 ppm by mass, not less than 7,000 ppm by mass, not less than 7,500 ppm by mass, not less than 8,000 ppm by mass, not less than 8,500 ppm by mass, not less than 9,000 ppm by mass, not less than 9,500 ppm by mass, not less than 10,000 ppm by mass, not less than 10,500 ppm by mass, not less than 11,000 ppm by mass, not less than 11,500 ppm by mass, not less than 12,000 ppm by mass, not less than 13,000 ppm by mass, not less than 14,000 ppm by mass, not less than 15,000 ppm by mass, not less than 16,000 ppm by mass, not less than 17,000 ppm by mass, not less than 18,000 ppm by mass, not less than 19,000 ppm by mass, not less than 20,000 ppm by mass, not less than 30,000 ppm by mass, not less than 40,000 ppm by mass, not less than 50,000 ppm by mass, or not less than 59,500 ppm by mass. In another embodiment, the content of the trivalent chromium contained in the trivalent chromium compound (A) in the aqueous surface treatment agent of the present embodiment is not more than 60,000 ppm by mass, not more than 50,000 ppm by mass, not more than 40,000 ppm by mass, not more than 30,000 ppm by mass, not more than 20,000 ppm by mass, not more than 19,000 ppm by mass, not more than 18,000 ppm by mass, not more than 17,000 ppm by mass, not more than 16,000 ppm by mass, not more than 15,000 ppm by mass, not more than 14,000 ppm by mass, not more than 13,000 ppm by mass, not more than 12,000 ppm by mass, not more than 11,500 ppm by mass, not more than 11,000 ppm by mass, not more than 10,500 ppm by mass, not more than 10,000 ppm by mass, not more than 9,500 ppm by mass, not more than 9,000 ppm by mass, not more than 8,500 ppm by mass, not more than 8,000 ppm by mass, not more than 7,500 ppm by mass, not more than 7,000 ppm by mass, not more than 6,500 ppm by mass, not more than 6,000 ppm by mass, not more than 5,500 ppm by mass, not more than 5,000 ppm by mass, not more than 4,500 ppm by mass, not more than 4,000 ppm by mass, not more than 3,500 ppm by mass, not more than 3,000 ppm by mass, not more than 2,500 ppm by mass, not more than 2,000 ppm by mass, not more than 1,500 ppm by mass, or not more than 1,000 ppm by mass.

The water-soluble or water-dispersible acrylic resin (B) is obtained by, for example, radical polymerization of a monomer composition including a monomer containing a hydroxyl group and a monomer containing a carboxyl group using, when necessary, a polymerization initiator.

Examples of the method of the radical polymerization include, but are not limited to, solution polymerization, emulsion polymerization, and suspension polymerization.

The polymerization temperature is not limited, and is, for example, 60°C to 160°C. The polymerization time is also not limited, and is, for example, 2 hours to 10 hours.

Examples of the polymerization initiator include, but are not limited to, 4,4'-azobis(4-cyanovaleric acid), 2,2'-azobis(2-methylpropionamidine)dihydrochloride, 2,2'-azobis-2-(2-imidazolin-2-yl)propane hydrochloride, ammonium peroxodisulfate, sodium peroxodisulfate, and potassium peroxodisulfate.

Examples of the monomer containing a hydroxyl group include, but are not limited to, 2-hydroxyethyl(meth)acrylate, 2-hydroxypropyl(meth)acrylate, 3-hydroxypropyl(meth)acrylate, 2-hydroxybutyl(meth)acrylate, 3-hydroxybutyl(meth)acrylate, 4-hydroxybutyl (meth)acrylate, 1,4-cyclohexanedimethanol mono(meth)acrylate, glycerin mono(meth)acrylate, (meth)allyl alcohol, N-methylol(meth)acrylamide, N-(2-hydroxyethyl)acrylamide, N-(2-hydroxypropyl)acrylamide, and ε-caprolactone adducts of 2-hydroxyethyl(meth)acrylate.

Examples of the monomer containing a carboxyl group include, but are not limited to, (meth)acrylic acid, crotonic acid, isocrotonic acid, (meth)acrylic acid dimer, and ε-caprolactone adducts of (meth)acrylic acid. Examples of the monomer containing a carboxyl group, other than those described above, include unsaturated dibasic acids such as maleic acid, fumaric acid, and itaconic acid; and their half esters, half amides, and half thioesters.

The monomer composition preferably further includes monomers containing one or more functional groups selected from the group consisting of a glycidyl group, an amide group (-CONR- (wherein R is a hydrogen atom or C₁-C₄ alkyl, and the alkyl may be either linear or branched)), an alkoxysilyl group, and a phosphate group. Thus, the water-soluble or water-dispersible acrylic resin (B) is preferably a copolymer obtained by copolymerizing monomers containing one or more functional groups selected from the group consisting of a glycidyl group, an amide group, an alkoxysilyl group, and a phosphate group. These monomers containing one or more functional groups selected from the group consisting of a glycidyl group, an amide group, an alkoxysilyl group, and a phosphate group may be used individually, or may be used as a combination of two or more thereof.

Examples of the monomer containing a glycidyl group include, but are not limited to, glycidyl(meth)acrylate, (meth)allylglycidyl ether 3,4-epoxycyclohexylmethyl(meth)acrylate, and 4-hydroxybutyl acrylate glycidyl ether. The glycidyl group in the monomer containing a glycidyl group reacts with the carboxyl group in the monomer containing a carboxyl group during the polymerization reaction, to generate an ester and a hydroxyl group. Thus, for a water-soluble or water-dispersible acrylic resin (B) obtained by copolymerization of monomers containing a glycidyl group, the solid acid value and the solid hydroxyl value are calculated based on the assumption that 1 mol of carboxyl groups are consumed per 1 mol of glycidyl groups to newly generate 1 mol of hydroxyl groups.

Examples of the monomer containing an amide group include, but are not limited to, (meth)acrylamide, N-methylol(meth)acrylamide, N,N-dimethyl(meth)acrylamide, N,N-diethyl(meth)acrylamide, N,N-dibutyl(meth)acrylamide, N,N-dioctyl(meth)acrylamide, N-methyl(meth)acrylamide, N-isopropylacrylamide, N-butyl(meth)acrylamide, N-hexyl(meth)acrylamide, and N-octyl(meth)acrylamide.

Examples of the monomer containing an alkoxysilyl group include, but are not limited to, vinyltrimethoxysilane, vinyltriethoxysilane, 3-(meth)acryloyloxypropylmethyldimethoxysilane, 3-(meth)acryloyloxypropylmethyldiethoxysilane, 3-(meth)acryloyloxypropyltrimethoxysilane, and 3-(meth)acryloyloxypropyltriethoxysilane. The monomer containing an alkoxysilyl group undergoes hydrolysis of the alkoxysilyl group during the polymerization reaction, to generate a hydroxyl group (silanol group). Thus, for a water-soluble or water-dispersible acrylic resin (B) obtained by copolymerization of monomers containing an alkoxysilyl group, the solid hydroxyl value is calculated based on the assumption that hydroxyl groups in an amount equivalent to that of alkoxysilyl groups are generated.

Examples of the monomer containing a phosphate group include, but are not limited to, acid phosphooxyethyl(meth)acrylate and acid phosphooxypolyoxyethylene glycol mono(meth)acrylate. For a water-soluble or water-dispersible acrylic resin (B) obtained by copolymerization of monomers containing a phosphate group, the solid acid value is calculated based on the assumption that the phosphate group is a dibasic acid (an acid having two hydrogen atoms capable of neutralization with bases per functional group).

The monomer composition may also include a monomer other than those described above (another monomer).

Examples of the other monomer include, but are not limited to, methyl(meth)acrylate, ethyl(meth)acrylate, n-propyl(meth)acrylate, 1-methylethyl(meth)acrylate, n-butyl(meth)acrylate, isobutyl(meth)acrylate, t-butyl(meth)acrylate, 2-ethylhexyl(meth)acrylate, lauryl(meth)acrylate, phenyl(meth)acrylate, isobornyl(meth)acrylate, cyclohexyl(meth)acrylate, t-butylcyclohexyl(meth)acrylate, dicyclopentadienyl(meth)acrylate, dihydrodicyclopentadienyl(meth)acrylate, and methoxypolyethylene(meth)acrylate. Examples of the other monomer, other than those described above, include styrene, α-methylstyrene, vinylketone, t-butylstyrene, p-chlorostyrene, vinylnaphthalene, acrylonitrile, methacrylonitrile, ethylene, propylene, vinyl acetate, vinyl propionate, butadiene, and isoprene.

Acid groups and hydroxyl groups in the water-soluble or water-dispersible acrylic resin (B) may be derived from monomers, or may be generated or added by modification of an acrylic resin.

Examples of a method of modifying an acrylic resin to generate hydroxyl groups include a method in which an epoxy compound is reacted with an acrylic resin containing a carboxyl group, and a method in which a silane coupling agent containing an epoxy group is reacted with an acrylic resin containing a carboxyl group. Reaction of a carboxyl group with an epoxy group generates an ester and a hydroxyl group.

Examples of epoxy compounds that can be used for the modification include phenol (EO)s glycidyl ether, p-tert-butylphenyl glycidyl ether, ethylene glycol diglycidyl ether, polyethylene glycol diglycidyl ether, resorcinol glycidyl ether, neopentyl glycol diglycidyl ether, 1,6-hexanediol diglycidyl ether, 1,4-butanediol diglycidyl ether, sorbitol polyglycidyl ether, pentaerythritol polyglycidyl ether, glycerol polyglycidyl ether, diglycerol polyglycidyl ether, propylene glycol diglycidyl ether, triglycidyl tris(2-hydroxyethyl)isocyanurate, bisphenol A glycidyl ether, and hydrogenated bisphenol A diglycidyl ether.

For a water-soluble or water-dispersible acrylic resin (B) obtained by the method in which an epoxy compound is reacted with an acrylic resin containing a carboxyl group, the solid acid value and the solid hydroxyl value are calculated based on the assumption that 1 mol of carboxyl groups in the acrylic resin are consumed per 1 mol of epoxy groups to newly generate 1 mol of hydroxyl groups.

Examples of the silane coupling agent containing an epoxy group, which may be used for the modification include 3-glycidoxypropylmethyldiethoxysilane, 3-glycidoxypropyltriethoxysilane, 2-(3,4-epoxycyclohexyl)ethyltrimethoxysilane, 3-glycidoxypropylmethyldimethoxysilane, and 3-glycidoxypropyltrimethoxysilane.

For a water-soluble or water-dispersible acrylic resin (B) obtained by the method in which a silane coupling agent containing an epoxy group is reacted with an acrylic resin containing a carboxyl group, the solid acid value and the solid hydroxyl value are calculated based on the assumption that 1 mol of carboxyl groups in the acrylic resin are consumed per 1 mol of epoxy groups to newly generate 1 mol of hydroxyl groups, and that alkoxysilyl groups are hydrolyzed to generate hydroxyl groups in an amount equivalent to that of the alkoxysilyl groups.

For a water-soluble or water-dispersible acrylic resin (B) obtained by modifying an acrylic resin by a known reaction other than these, the solid acid value and the solid hydroxyl value are calculated based on the assumption that increases and decreases in acid groups and hydroxyl groups in the reaction occur stoichiometrically.

The water-soluble or water-dispersible acrylic resin (B) has a number average molecular weight of preferably 9,000 to 500,000, more preferably 50,000 to 200,000. When the water-soluble or water-dispersible acrylic resin (B) has a number average molecular weight of not less than 9,000, improved adhesion of the laminate film can be achieved in cases where the metal is subjected to lamination processing, while when the water-soluble or water-dispersible acrylic resin (B) has a number average molecular weight of not more than 500,000, the aqueous surface treatment agent of the present embodiment can have improved storage stability. In one embodiment, the water-soluble or water-dispersible acrylic resin (B) has a number average molecular weight of not less than 9,000, not less than 10,000, not less than 20,000, not less than 30,000, not less than 40,000, not less than 50,000, not less than 60,000, not less than 70,000, not less than 80,000, not less than 90,000, not less than 100,000, not less than 110,000, not less than 120,000, not less than 130,000, not less than 140,000, not less than 150,000, not less than 160,000, not less than 170,000, not less than 180,000, or not less than 190,000. In another embodiment, the water-soluble or water-dispersible acrylic resin (B) has a number average molecular weight of not more than 200,000, not more than 190,000, not more than 180,000, not more than 170,000, not more than 160,000, not more than 150,000, not more than 140,000, not more than 130,000, not more than 120,000, not more than 110,000, not more than 100,000, not more than 90,000, not more than 80,000, not more than 70,000, not more than 60,000, not more than 50,000, not more than 40,000, not more than 30,000, not more than 20,000, or not more than 10,000.

The number average molecular weight of the water-soluble or water-dispersible acrylic resin (B) is a molecular weight determined by the GPC method using polyethylene oxide as a reference material.

In the aqueous surface treatment agent of the present embodiment, the solid content of the water-soluble or water-dispersible acrylic resin (B) is not limited, and is, for example, 1,000 ppm by mass to 500,000 ppm by mass. In one embodiment, the solid content of the water-soluble or water-dispersible acrylic resin (B) in the aqueous surface treatment agent is not less than 1,000 ppm by mass, not less than 1,500 ppm by mass, not less than 2,000 ppm by mass, not less than 2,500 ppm by mass, not less than 3,000 ppm by mass, not less than 3,500 ppm by mass, not less than 4,000 ppm by mass, not less than 4,500 ppm by mass, not less than 5,000 ppm by mass, not less than 5,500 ppm by mass, not less than 6,000 ppm by mass, not less than 6,500 ppm by mass, not less than 7,000 ppm by mass, not less than 7,500 ppm by mass, not less than 8,000 ppm by mass, not less than 8,500 ppm by mass, not less than 9,000 ppm by mass, not less than 9,500 ppm by mass, not less than 10,000 ppm by mass, not less than 10,500 ppm by mass, not less than 11,000 ppm by mass, not less than 11,500 ppm by mass, not less than 12,000 ppm by mass, not less than 13,000 ppm by mass, not less than 14,000 ppm by mass, not less than 15,000 ppm by mass, not less than 16,000 ppm by mass, not less than 17,000 ppm by mass, not less than 18,000 ppm by mass, not less than 19,000 ppm by mass, not less than 20,000 ppm by mass, not less than 30,000 ppm by mass, not less than 40,000 ppm by mass, not less than 50,000 ppm by mass, not less than 60,000 ppm by mass, not less than 70,000 ppm by mass, not less than 80,000 ppm by mass, not less than 90,000 ppm by mass, not less than 100,000 ppm by mass, not less than 200,000 ppm by mass, not less than 300,000 ppm by mass, or not less than 400,000 ppm by mass. In another embodiment, the solid content of the water-soluble or water-dispersible acrylic resin (B) in the aqueous surface treatment agent is not more than 500,000 ppm by mass, not more than 400,000 ppm by mass, not more than 300,000 ppm by mass, not more than 200,000 ppm by mass, not more than 100,000 ppm by mass, not more than 90,000 ppm by mass, not more than 80,000 ppm by mass, not more than 70,000 ppm by mass, not more than 60,000 ppm by mass, not more than 50,000 ppm by mass, not more than 40,000 ppm by mass, not more than 30,000 ppm by mass, not more than 20,000 ppm by mass, not more than 19,000 ppm by mass, not more than 18,000 ppm by mass, not more than 17,000 ppm by mass, not more than 16,000 ppm by mass, not more than 15,000 ppm by mass, not more than 14,000 ppm by mass, not more than 13,000 ppm by mass, not more than 12,000 ppm by mass, not more than 11,500 ppm by mass, not more than 11,000 ppm by mass, not more than 10,500 ppm by mass, not more than 10,000 ppm by mass, not more than 9,500 ppm by mass, not more than 9,000 ppm by mass, not more than 8,500 ppm by mass, not more than 8,000 ppm by mass, not more than 7,500 ppm by mass, not more than 7,000 ppm by mass, not more than 6,500 ppm by mass, not more than 6,000 ppm by mass, not more than 5,500 ppm by mass, not more than 5,000 ppm by mass, not more than 4,500 ppm by mass, not more than 4,000 ppm by mass, not more than 3,500 ppm by mass, not more than 3,000 ppm by mass, not more than 2,500 ppm by mass, not more than 2,000 ppm by mass, or not more than 1,500 ppm by mass.

The aqueous surface treatment agent of the present embodiment preferably further includes an organic chelating agent (C). This improves the storage stability of the aqueous surface treatment agent of the present embodiment. The organic chelating agent (C) is a ligand having a plurality of coordination sites in one molecule (multidentate ligand), and has a plurality of functional groups in one molecule.

The organic chelating agent (C) preferably contains one or more functional groups selected from the group consisting of a hydroxyl group, a carboxyl group, a phosphonate group, a phosphate group, and an amino group.

Examples of the organic chelating agent (C) containing a hydroxyl group include, but are not limited to, ethylene glycol, propylene glycol, butylene glycol, hexanediol, thiodiglycol, glycerin, trimethylolpropane, pentaerythritol, sorbitol, catechol, pyrogallol, hexahydroxybenzene, 2-aminoethanol, diethanolamine, triethanolamine, lactic acid, tartaric acid, malic acid, citric acid, ascorbic acid, N,N-bis(2-hydroxyethyl)glycine, hydroxyethylenediaminetriacetic acid, N-(2-hydroxyethyl)iminodiacetic acid, N-(2-hydroxyethyl)ethylenedinitrilotriacetic acid, 1,3-diamino-2-propanol-N,N,N',N'-tetraacetic acid, 1-hydroxyethylidene-1,1-diphosphonic acid, gallic acid, pyrogallol-4-carboxylic acid, 2-hydroxybenzoic acid, 2,3-dihydroxybenzoic acid, 2,4-dihydroxybenzoic acid, 2,5-dihydroxybenzoic acid, 2,6-dihydroxybenzoic acid, 3,4-dihydroxybenzoic acid, 2,4,6-trihydroxybenzoic acid, 2,6-dihydroxy-4-methylbenzoic acid, 4-hydroxy-3,5-dimethylbenzoic acid, and glycerophosphoric acid.

Examples of the organic chelating agent (C) containing a carboxyl group include, but are not limited to, lactic acid, oxalic acid, tartaric acid, malic acid, citric acid, ascorbic acid, succinic acid, itaconic acid, maleic acid, fumaric acid, phthalic acid, trimellitic acid, hemimellitic acid, trimesic acid, pyromellitic acid, mellitic acid, N,N-bis(2-hydroxyethyl)glycine, nitrilotriacetic acid, N-(2-hydroxyethyl)iminodiacetic acid, ethylenediaminetetraacetic acid, 1,3-propanediaminetetraacetic acid, hydroxyethylenediaminetriacetic acid, N-(2-hydroxyethyl)ethylenedinitrilotriacetic acid, 1,3-diamino-2-propanol-N,N,N',N'-tetraacetic acid, glycoletherdiaminetetraacetic acid, trans-1,2-diaminocyclohexane-N,N,N',N'-tetraacetic acid, ethylenetriaminepentaacetic acid, triethylenetetramine-N,N,N',N",N‴,N‴-hexaacetic acid, 1,3-propanedicarboxylic acid, 1,4-butanedicarboxylic acid, 1,5-heptanedicarboxylic acid, 1,2,3-butanetricarboxylic acid, 1,2,4-butanetricarboxylic acid, 1,2,3,4-butanetetracarboxylic acid, 1,2,4,5,-cyclohexanetetracarboxylic acid, 1,2,3,4,5,6-cyclohexanehexacarboxylic acid, gallic acid, pyrogallol-4-carboxylic acid, 2-hydroxybenzoic acid, 2,3-dihydroxybenzoic acid, 2,4-dihydroxybenzoic acid, 2,5-dihydroxybenzoic acid, 2,6-dihydroxybenzoic acid, 3,4-dihydroxybenzoic acid, 2,4,6-trihydroxybenzoic acid, 2,6-dihydroxy-4-methylbenzoic acid, 4-hydroxy-3,5-dimethylbenzoic acid, 2-phosphonobutane-1,2,4-tricarboxylic acid, 3-phosphonopropionic acid, 4-phosphonobutyric acid, and phosphoserine.

In the organic chelating agent (C) containing a carboxyl group, some or all of its carboxyl group(s) may be neutralized to form metal salt or ammonium salt.

Examples of the organic chelating agent (C) containing a phosphonate group include, but are not limited to, methylenediphosphonic acid, 1,2-ethylenediphosphonic acid, 1-hydroxyethylidene-1,1-diphosphonic acid, nitrilotris(methylphosphonic acid), 2-phosphonobutane-1,2,4-tricarboxylic acid, 3-phosphonopropionic acid, 4-phosphonobutyric acid, ethylenediaminetetramethylenephosphonic acid, and diethylenetriaminepentamethylenephosphonic acid.

In the organic chelating agent (C) containing a phosphonate group, some or all of its phosphonate group(s) may be neutralized to form metal salt or ammonium salt.

Examples of the organic chelating agent (C) containing a phosphate group include, but are not limited to, phytic acid, O-phosphorylethanolamine, phosphoserine, and glycerophosphoric acid.

In the organic chelating agent (C) containing a phosphate group, some or all of its phosphate group(s) may be neutralized to form metal salt or ammonium salt.

Examples of the organic chelating agent (C) containing an amino group include, but are not limited to, ethylenediamine, 1,3-propanediamine, 1,4-butanediamine, diethylenetriamine, triethylenetetramine, 2-aminoethanol, O-phosphorylethanolamine, and phosphoserine.

In the organic chelating agent (C) containing an amino group, some or all of its amino group(s) may be neutralized by an acid to form a salt.

In the aqueous surface treatment agent of the present embodiment, the solid content of the organic chelating agent (C) is not limited, and is, for example, 0.01% by mass to 30% by mass. In one embodiment, the solid content of the organic chelating agent (C) in the aqueous surface treatment agent is not less than 0.01% by mass, not less than 0.05% by mass, not less than 0.1% by mass, not less than 0.5% by mass, not less than 1% by mass, not less than 2% by mass, not less than 3% by mass, not less than 4% by mass, not less than 5% by mass, not less than 6% by mass, not less than 7% by mass, not less than 8% by mass, not less than 9% by mass, not less than 10% by mass, not less than 15% by mass, not less than 20% by mass, not less than 25% by mass, or not less than 28% by mass. In another embodiment, the solid content of the organic chelating agent (C) in the aqueous surface treatment agent is not more than 30% by mass, not more than 28% by mass, not more than 25% by mass, not more than 20% by mass, not more than 15% by mass, not more than 10% by mass, not more than 9% by mass, not more than 8% by mass, not more than 7% by mass, not more than 6% by mass, not more than 5% by mass, not more than 4% by mass, not more than 3% by mass, not more than 2% by mass, not more than 1% by mass, not more than 0.5% by mass, not more than 0.1% by mass, or not more than 0.05% by mass.

The water content in the aqueous surface treatment agent of the present embodiment is not limited, and is, for example, 50% by mass to 99.9% by mass.

The aqueous surface treatment agent of the present embodiment has a pH of preferably 1 to 11, more preferably 2 to 9. In cases where the aqueous surface treatment agent of the present embodiment has a pH of 1 to 11, the aqueous surface treatment agent of the present embodiment can have improved storage stability.

The aqueous surface treatment agent of the present embodiment may also include, when necessary, an acid or a base for adjustment of the pH. Examples of the acid include, but are not limited to, inorganic acids such as hydrochloric acid, sulfuric acid, nitric acid, phosphoric acid, pyrophosphate, metaphosphate, and hydrofluoric acid; and organic acids such as acetic acid, trifluoroacetic acid, benzoic acid, methanesulfonic acid, benzenesulfonic acid, and toluenesulfonic acid. Examples of the base include, but are not limited to, inorganic bases such as ammonia, sodium hydroxide, calcium hydroxide, potassium hydroxide, sodium carbonate, potassium carbonate, and sodium hydrogen carbonate; and organic bases such as trimethylamine, diethylamine, and triethylamine.

The aqueous surface treatment agent of the present embodiment may also include, when necessary, an organic solvent miscible with water for adjustment of the solid concentration and the drying rate. Examples of the organic solvent miscible with water include, but are not limited to, ketone solvents such as acetone and methyl ethyl ketone; amide solvents such as N,N'-dimethylformamide and dimethylacetamide; alcohol solvents such as methanol, ethanol, isopropyl alcohol, and 1-methoxy-2-propanol; ether solvents such as ethylene glycol monobutyl ether and ethylene glycol monohexyl ether; and pyrrolidone solvents such as 1-methyl-2-pyrrolidone and 1-ethyl-2-pyrrolidone.

The aqueous surface treatment agent of the present embodiment may also include, when necessary, a known additive such as a cross-linking agent, a surface conditioner, an antifoaming agent, a plasticizer, an antioxidant, an antimicrobial agent, or a coloring agent.

The cross-linking agent is not limited as long as it is capable of forming a bond with the trivalent chromium compound (A) or the water-soluble or water-dispersible acrylic resin (B). Examples of the cross-linking agent include melamine resins, blocked isocyanates, epoxy compounds, carbodiimide compounds, and organic titanium compounds.

Examples of the melamine resins include known melamine resins such as fully alkylated melamine resins, methylol-type melamine resins, imino-type melamine resins, and methylol/imino-type melamine resins. Examples of their commercially available products include Cymel (301, 303, 325, 327, etc.), manufactured by Mitsui Cytec Ltd.; and Nikalac (MW-30, MX-45, etc.), manufactured by Sanwa Chemical Co., Ltd.

As a blocked isocyanate, a blocked isocyanate obtained by reacting an isocyanate group(s) in a known isocyanate with a blocking agent may be used. Examples of the isocyanate include organic polyisocyanates such as naphthalene diisocyanate, isophorone diisocyanate (IPDI), xylylene diisocyanate (XDI), hexamethylene diisocyanate (HMDI), tetramethylxylylene diisocyanate (TMXDI), dicyclohexylmethane diisocyanate (H12MDI), hydrogenated diphenylmethane diisocyanate (hydrogenated MDI), diphenylmethane diisocyanate (MDI), and tolylene diisocyanate (TDI); biuret products, isocyanurate products, and carbodiimide-modified products thereof; and mixtures thereof.

Examples of the blocking agent include phenols such as phenol, butylphenol, chlorophenol, and phenylphenol; oximes such as methyl ethyl ketoxime, cyclohexane oxime, and acetoxime; imidazoles such as imidazole, 2-methylimidazole, 2-ethylimidazole, 2-phenylimidazole, 2-undecylimidazole, and 2-heptadecylimidazole; and bisulfites such as sodium bisulfite.

Examples of the epoxy compounds include known water-soluble or water-dispersible epoxy compounds. The epoxy compounds are preferably multifunctional epoxy compounds, such as ethylene glycol diglycidyl ether, polyethylene glycol diglycidyl ether, resorcinol glycidyl ether, neopentyl glycol diglycidyl ether, 1,6-hexanediol diglycidyl ether, 1,4-butanediol diglycidyl ether, sorbitol polyglycidyl ether, pentaerythritol polyglycidyl ether, glycerol polyglycidyl ether, diglycerol polyglycidyl ether, propylene glycol diglycidyl ether, triglycidyl tris(2-hydroxyethyl)isocyanurate, bisphenol A glycidyl ether, and hydrogenated bisphenol A diglycidyl ether.

Examples of the carbodiimide compounds include known water-soluble or water-dispersible polycarbodiimide compounds. Examples of their commercially available products include Carbodilite (V-02, V-02-L2, SV-02, V-04, V-10, E-02, E-05, etc.), manufactured by Nisshinbo Chemical Inc.

Examples of the organic titanium compounds include titanium lactate, titanium acetyl acetonate, titanium triethanolaminate, titanium octyl glycolate, tetraisopropyl titanate, and tetra-normal-butyl titanate.

In the later-described drying process for formation of a coating film, the cross-linking agent allows cross-linking reaction with the water-soluble or water-dispersible acrylic resin (B) to proceed. Therefore, in the present description and claims, the cross-linking agent should not change the solid acid value and the solid hydroxyl value of the water-soluble or water-dispersible acrylic resin (B) in the aqueous surface treatment agent unless an operation for allowing the cross-linking reaction to proceed, such as heating, is carried out.

Examples of the surface conditioner include nonionic or cationic surfactants, polyethylene oxide or polypropylene oxide adducts of polyacetylene glycols, and acetylene glycol compounds.

Examples of the antifoaming agent include mineral-oil antifoaming agents, fatty acid antifoaming agents, and silicone antifoaming agents.

Examples of the plasticizer include 2,2,4-trimethyl-1,3-pentanediol monoisobutyrate, diethylene glycol monobutyl ether acetate, ethylene glycol monobutyl ether, dipropylene glycol n-butyl ether, and diethylene glycol dibutylether.

Examples of the antioxidant include phenolic antioxidants, phosphorus antioxidants, and sulfur antioxidants. Specific examples of the antioxidant include 2,6-di-t-butylphenol, 2,4-dimethyl-6-t-butylphenol, butylhydroxytoluene (BHT), 2,6-di-t-butyl-4-ethylphenol, 2,4,6-tri-t-butylphenol, 2,6-di-t-butyl-4-s-butylphenol, butylhydroxyanisole (BHA), tocopherol, 2,6-di-t-butyl-4-hydroxymethylphenol, n-octadecyl-β-(4'-hydroxy-3',5'-di-t-butylphenyl)propionate, 2,6-di-t-butyl-4-(N,N-dimethylaminomethyl)phenol, diethyl 3,5-di-t-butyl-4-hydroxybenzyl phosphonate, propyl gallate, octyl gallate, lauryl gallate, 2,2'-methylenebis(4-methyl-6-t-butylphenol), 2,2'-methylenebis(4-ethyl-6-t-butylphenol), 4,4'-methylenebis(2,6-di-t-butylphenol), 2,2'-methylenebis(4-methyl-6-cyclohexylphenol), 2,2'-dihydroxy-3,3'-bis(α-methylcyclohexyl)-5,5'-dimethyldiphenylmethane, 2,2'-methylenebis(6-α-methylbenzyl-p-cresol), 2,2'-ethylidenebis(4,6-di-t-butylphenol), 2,2'-butylidenebis(4-methyl-6-t-butylphenol), 4,4'-butylidenebis(3-methyl-6-t-butylphenol), triethylene glycol bis[3-(3-t-butyl-4-hydroxy-5-methylphenyl)propionate], 1,6-hexanediol bis[3-(3,5-di-t-butyl-4-hydroxyphenyl)propionate], bis[2-t-butyl-4-methyl-6-(3-t-butyl-5-methyl-2-hydroxybenzyl)phenyl]terephthalate, 3,9-bis[2-{3-(3-t-butyl-4-hydroxy-5-methylphenyl)propionyloxy}-1,1-dimethylethyl]-2,4,8,10-tetraoxaspiro[5,5]undecane, 4,4'-thiobis(6-t-butyl-m-cresol), 4,4'-thiobis(3-methyl-6-t-butylphenol), 2,2'-thiobis(4-methyl-6-t-butylphenol), bis(3,5-di-t-butyl-4-hydroxybenzyl)sulfide, 4,4'-thiobis(2,6-di-t-butylphenol), 2,2-thiodiethylenebis[3-(3,5-di-t-butyl-4-hydroxyphenyl)propionate], 2,4-bis(n-octylthio)-6-(4-hydroxy-3',5'-di-t-butylanilino)-1,3,5-triazine, N,N'-hexamethylenebis-(3,5-di-t-butyl-4-hydroxyhydrocinnamide, N,N'-bis[3-(3,5-di-t-butyl-4-hydroxyphenyl)propionyl]hydrazine, calcium (3,5-di-t-butyl-4-hydroxybenzyl monoethylphosphonate), alkylated bisphenol, 1,1,3-tris(2-methyl-4-hydroxy-5-t-butylphenyl)butane, 1,3,5-trimethyl-2,4,6-tris(3,5-di-t-butyl-4-hydroxybenzyl)benzene, tris(3,5-di-t-butyl-4-hydroxyphenyl)isocyanurate, tris(3,5-dit-butyl-4-hydroxybenzyl)isocyanurate, 1,3,5-tris(4-t-butyl-3-hydroxy-2,6-dimethylbenzyl)isocyanurate, 1,3,5-tris[{3-(3,5-di-t-butyl-4-hydroxyphenyl)propionyloxy}ethyl]isocyanurate, tetrakis[methylene-3-(3',5'-di-t-butyl-4-hydroxyphenyl)propionate]methane, bis[3,3-bis(3-t-butyl-4-hydroxyphenyl)butyrate]ethylene, triphenylphosphite, diphenylnonylphenyl phosphite, tris(2,4-di-t-butylphenyl)phosphite, tris(nonylphenyl)phosphite, tris(mono- and di-mixed nonylphenyl)phosphite, diphenylisooctyl phosphite, 2,2'-methylenebis(4,6-di-t-butylphenyl)octylphosphite, diphenylisodecyl phosphite, diphenylmonotridecyl phosphite, 2,2'-ethylidenebis(4,6-di-t-butylphenol)fluorophosphite, phenyldiisodecyl phosphite, phenylditridecyl phosphite, tris(2-ethylhexyl)phosphite, triisodecyl phosphite, tris(tridecyl)phosphite, dibutylhydrogen phosphite, trilauryltrithio phosphite, tetrakis(2,4-di-t-butylphenyl)-4,4'-biphenylene diphosphonite, 4,4'-isopropylidene diphenolalkyl (C₁₂-C₁₅) phosphite, 4,4'-butylidenebis(3-methyl-6-t-butylphenyl)ditridecylphosphite, distearyl pentaerythritol diphosphite, bis(nonylphenyl)pentaerythritol diphosphite, bis(2,4-di-t-butylphenyl)pentaerythritol diphosphite, cyclic neopentanetetraylbis(2,6-di-t-butyl-4-methylphenyl phosphite, phenyl bisphenol A pentaerythritol diphosphite, tetraphenyl dipropylene glycol diphosphite, 1,1,3-tris(2-methyl-4-di-tridecylphosphite-5-t-butylphenyl)butane, tetraphenyl tetratridecyl pentaerythritol tetraphosphite, zinc dialkyldithiophosphate (ZnDTP), 3,4,5,6-dibenzo-1,2-oxaphosphane-2-oxide, diethyl 3,5-di-t-butyl-4-hydroxybenzylphosphonate, hydrogenated bisphenol A phosphite polymers, dilauryl 3,3'-thiodipropionate (DLTTDP), ditridecyl 3,3'-thiodipropionate, dimyristyl 3,3'-thiodipropionate (DMTDP), distearyl 3,3'-thiodipropionate (DSTDP), laurylstearyl 3,3'-thiodipropionate, pentaerythritol tetrakis(β-laurylthiopropionate), stearyl thiopropionamide, bis [2-methyl-4-(3-n-alkyl(C₁₂-C₁₄)thiopropionyloxy)-5-t-butylphenyl]sulfide, dioctadecyldisulfide, 2-mercaptobenzimidazole, 2-mercapto-6-methylbenzimidazole, and 1,1'-thiobis(2-naphthol) .

Examples of the antimicrobial agent include zinc pyrithione, 2-(4-thiazolyl)benzimidazole, 1,2-benzisothiazoline, 2-n-octyl-4-isothiazolin-3-one, N-(fluorodichloromethylthio)phthalimide, N,N-dimethyl-N'-phenyl-N'-(fluorodichloromethylthio)sulfamide, methyl 2-benzimidazole carbamate, bis(dimethylthiocarbamoyl)disulfide, N-(trichloromethylthio)-4-cyclohexene-1,2-dicarboximide, barium metaborate, allyl isothiocyanate; quaternary ammonium salts such as polyoxyalkylene trialkyl ammonium, organic silicone quaternary ammonium salt, and hexamethylene biguanide hydrochloride; quaternary phosphonium salts such as tri-n-butyltetradecylphosphonium chloride; polyphenol antimicrobial agents, phenylamide antimicrobial agents, and biguanide antimicrobial agents.

Examples of the coloring agent include pigments, for example, organic pigments such as quinacridone pigments, anthraquinone pigments, perylene pigments, perinone pigments, diketopyrrolopyrrole pigments, isoindolinone pigments, condensed azo pigments, benzimidazolone pigments, monoazo pigments, insoluble azo pigments, naphthol pigments, flavanthrone pigments, anthrapyrimidine pigments, quinophthalone pigments, pyranthrone pigments, pyrazolone pigments, thioindigo pigments, anthanthrone pigments, dioxazine pigments, phthalocyanine pigments, and indanthrone pigments; and inorganic pigments such as metal complexes including nickel dioxine yellow and copper azomethine yellow; metal oxides including titanium oxide, iron oxide, and zinc oxide; metal salts including barium sulfate and calcium carbonate; carbon black, aluminum, and mica; and dyes, for example, azo dyes, quinoline dyes, stilbene dyes, thiazole dyes, indigoid dyes, anthraquinone dyes, and oxazine dyes.

The aqueous surface treatment agent of the present embodiment includes predetermined amounts of the trivalent chromium compound (A) and the water-soluble or water-dispersible acrylic resin (B). Therefore, the agent has excellent coating workability and storage stability, and moreover, the later-described surface-treated metal of the present embodiment shows sufficient adhesion to a laminate film. An aqueous surface treatment agent simply including a trivalent chromium compound and a water-soluble or water-dispersible acrylic resin is capable of improving the corrosion resistance of a surface-treated metal. However, the aqueous surface treatment agent of the present embodiment is capable of improving the adhesion of the later-described surface-treated metal of the present embodiment to a laminate film and the electrolyte resistance of the surface-treated metal, as well as improving the corrosion resistance of the surface-treated metal. Therefore, the aqueous surface treatment agent of the present embodiment can be especially preferably used for the production of a surface-treated metal for which adhesion to a laminate film after lamination processing, electrolyte resistance, and corrosion resistance are required.

### [Surface-Treated Metal]

A surface-treated metal of the present embodiment includes: a metal; and a coating film formed by surface treatment of the metal using an aqueous surface treatment agent of the present embodiment.

Examples of the shape of the metal include, but are not limited to, foil-like shapes and plate-like shapes. In cases where a metal having a foil-like shape or a plate-like shape is used, only one side may be subjected to surface treatment with the aqueous surface treatment agent, or both sides may be subjected to surface treatment with the aqueous surface treatment agent. In cases where both sides are subjected to the surface treatment, a single aqueous surface treatment agent may be used to carry out the surface treatment of both sides, or an aqueous surface treatment agent having a different composition may be used to carry out the surface treatment of each side.

The metal having the coating film in the surface-treated metal of the present embodiment may be laminated. More specifically, the metal having the coating film may have a laminate film adhered thereto. In cases where a metal having a coating film and having a foil-like shape or a plate-like shape is used, only one side may have a laminate film adhered thereto, or both sides may have laminate films adhered thereto. In cases where both sides have laminate films adhered thereto, the laminate films adhered to both sides may be of the same type, or the laminate film adhered to each side may be of a different type.

Examples of a material constituting the laminate film include, but are not limited to, polyethylene resins, polypropylene resins, polycarbonate resins, polyvinyl alcohol resins, polyvinyl acetal resins, polyvinylidene chloride resins, polyvinyl acetate resins, polyethylene terephthalate resins, polyethylene naphthalate resins, polybutylene terephthalate resins, polyethylene isophthalate resins, copolymerized polyester resins, polyester resins, polyamide resins, polyimide resins, polyetherimide resins, polyphenylene sulfide resins, fluorocarbon resins, silicone resins, nylon resins, phenolic resins, (meth)acrylic resins, epoxy resins, and polymetaxylylene adipamide resins. These materials may be used individually, or may be used as a combination of two or more thereof.

The laminate film may be either uniaxially stretched or biaxially stretched.

As the laminate film, a single-layer film may be used, or a multilayered film including a stack of a plurality (of types) of films may be used. In cases where the laminate film includes a stack of a plurality of films, each film may be deposited via an adhesive, or may be directly deposited without an adhesive. The adhesive may be either a one-component curing adhesive or a two-component curing adhesive. Examples of a resin component constituting the adhesive include polyester resins, polyether resins, polyurethane resins, epoxy resins, phenolic resins, polyamide resins, polyolefin resins, polyvinyl acetate resins, cellulose resins, (meth)acrylic resins, polyimide resins, amino resins, rubbers, and silicone resins. Examples of the method of directly depositing a plurality of films into layers without an adhesive include methods in which the films are adhered in the hot-melt state, such as the coextrusion method, the sandwich lamination method, and the thermal lamination method.

The surface-treated metal of the present embodiment may have a layer other than the coating film and the laminate film (another layer). The other layer may be placed between the coating film and the laminate film, or may be placed on the laminate film. Alternatively, the other layer may be placed on the coating film, without using the laminate film.

Examples of the other layer include, but are not limited to, known layers such as adhesive layers, coatings, hard coat layers, antifouling layers, antiglare layers, design layers, printing layers, polarizing plates, colored layers, liquid crystal layers, light guide plates, transparent conductive films, and spacers. These other layers may be used individually, or may be used as a combination of two or more thereof.

The adhesive layer may be formed by a one-component adhesive, or may be formed by a two-component adhesive.

Examples of a resin component constituting an adhesive that may be used for the formation of the adhesive layer include polyolefin resins, polyester resins, polyether resins, polyurethane resins, polycarbonate resins, epoxy resins, phenolic resins, polyamide resins, polyvinyl acetate resins, cellulose resins, (meth)acrylic resins, polyimide resins, amino resins, chloroprene rubber resins, nitrile rubber resins, styrene-butadiene rubber resins, silicone resins, and fluorinated ethylene-propylene copolymer resins. These resin components may be used individually, or may be used as a combination of two or more thereof. Examples of the combination of two or more adhesives include: a polyurethane resin and a modified polyolefin resin; a polyamide resin and an acid-modified polyolefin resin; a polyamide resin and a metal-modified polyolefin resin; a polyamide resin and a polyester resin; a polyester resin and an acid-modified polyolefin resin; and a polyester resin and a metal-modified polyolefin resin.

Examples of the polyolefin resins include acid-modified polyolefin resins and metal-modified polyolefin resins. Examples of the acid-modified polyolefin resins include polyolefin resins prepared by acid modification with an unsaturated carboxylic acid or an anhydride thereof, such as maleic anhydride-modified polypropylenes. Examples of commercially available products of the acid-modified polypropylene resins include Admer (NB508, NF518, LB548, QB510, QB550, LB458, NF528, LF128, LF308, NF308, NF548, NF558, SF600, SF700, SF731, SF715, SE800, NE060, NE065, NE090, XE070, HE040, QE060, QF500, QF551, QF570, NR106, NS101, etc.), manufactured by Mitsui Chemicals, Inc.; Unistol (R-200X, R-303XE, E-200EM, A-200PM, A-201PM, H-100, H-200, XP01A, XP01B/11B, XP03F, XP04A, etc.), manufactured by Mitsui Chemicals, Inc.; Modic (P502, P512VB, P553A, P674V, P565, P555, P908H511, H503, H514, L502, L504, M142, M512, M522, M545, A543, F502, F573, F534A), manufactured by Mitsubishi Chemical Corp.; and Arrowbase (SB-1200, SE-1200, SD-1200, DA1010, DC-1010, YA-6010, etc.), manufactured by Unitika Ltd.

Examples of the method of forming the adhesive layer include, but are not limited to, the extrusion molding method and the dispersion method.

The surface-treated metal of the present embodiment may be applied to exterior materials for batteries. It may also be applied to, for example, food packaging materials; body or lid materials for food cans; body or lid materials for beverage cans; flexible packaging materials or surface protection materials containing a metal foil, such as aluminum pouches; battery separators; tab leads; condenser cases; heat exchangers; housings for electronic devices; metal building materials; bodies, engine components, or chassis components for vehicles; bodies, main wings, frames, fuel tanks, engine turbines, engine fans, or components of aircrafts; bodies, bogies, or components of railway vehicles; ships; rocket members; bicycle components; vending machines; cabin side panels, governors, or winches for elevators; steps or interior panels for escalators; machine tools; injection molding machines; structural or driving members for industrial robots; semiconductor manufacturing equipment; displays; submarines; signals; automatic looms; tunnel boring machines; pipelines; road signs; generators; waste incinerators; exhaust-gas treatment equipment; motors; transformers; electronic circuits; light bulbs; photomultipliers; golf clubs; antennas; bolts; nuts; or screws.

### [Surface Treatment Method]

A surface treatment method of the present embodiment includes a coating-film formation process of forming a coating film by carrying out surface treatment of a metal using an aqueous surface treatment agent of the present embodiment.

In the coating-film formation process, for example, the aqueous surface treatment agent of the present embodiment is applied to a surface(s) of the metal, followed by drying the agent.

Examples of the method of applying the aqueous surface treatment agent of the present embodiment include, but are not limited to, roll coater coating, gravure coater coating, reverse coater coating, slot die coater coating, lip coater coating, knife coater coating, blade coater coating, chamber doctor coater coating, air knife coater coating, curtain coater coating, spin coater coating, brush coating, roller coating, bar coater coating, dip coating, applicator coating, spray coating, flow coating, and combinations of these.

The drying method is not limited, and may be a known method. Examples of the method include, but are not limited to, heating and drying methods such as a method using an oven to carry out drying, a method using forced circulation of hot air to carry out drying, and a method using an electromagnetic induction furnace that employs an IH heater or the like, to carry out drying. The heating and drying methods may be carried out, for example, under conditions at a temperature of 40°C to 230°C for 2 seconds to 180 seconds. Conditions such as the air volume and the air velocity for the heating and drying may be set arbitrarily.

In the coating-film formation process, the aqueous surface treatment agent of the present embodiment may be dried while the agent is applied to a surface(s) of the metal. For example, the aqueous surface treatment agent of the present embodiment may be applied to a surface(s) of a preheated metal to dry the agent.

The amount of coating film formed after the drying in the coating-film formation process is preferably 0.1 mg/m² to 5,000 mg/m², more preferably 1 mg/m² to 500 mg/m².

The surface treatment method of the present embodiment may also include a lamination process of laminating a metal having a coating film.

Examples of the method of laminating a metal having a coating film include, but are not limited to, known methods such as dry lamination, heat lamination, and extrusion lamination.

Although embodiments of the present invention are described above, the present invention is not limited to the above embodiments, and the above embodiments may be modified as appropriate within the scope of the spirit of the present invention.

### EXAMPLES

Although Examples of the present invention are described below, the present invention is not limited to the Examples.

### [Synthesis Examples 1 to 17, and Comparative Synthesis Examples 1 and 2]

Radical polymerization was carried out by the following method to synthesize water-soluble or water-dispersible acrylic resins (B).

Ion-exchanged water was added to a flask equipped with a heater and a stirrer, and then heated to 80°C with stirring under nitrogen reflux. Subsequently, while heating, stirring, and nitrogen reflux were carried out, each of a monomer composition and a polymerization-initiator-containing aqueous solution was added dropwise thereto for 3 hours using a dropping funnel, and then the heating, stirring, and nitrogen reflux were continued for 2 hours. Subsequently, the heating and nitrogen reflux were stopped, and then the polymerization solution was cooled to 30°C with stirring. Subsequently, the pH was adjusted to 9 with 25% by mass aqueous ammonia solution, and then 200-mesh filtration was carried out to obtain a water-soluble or water-dispersible acrylic resin (B). The water-soluble or water-dispersible acrylic resins (B) of Synthesis Examples 1 to 17 and Comparative Synthesis Examples 1 and 2 were water-soluble. The above-described amount of the 25% by mass aqueous ammonia solution used to adjust the pH to 9 is the amount of the solution added as a pH adjusting agent, and is not included in the amount of the 25% by mass aqueous ammonia solution contained in the polymerization-initiator-containing aqueous solution in Table 1.

Table 1 shows the amounts (parts by mass) of the ion-exchanged water; each kind of monomers contained in the monomer composition; and the polymerization initiator, the 25% by mass aqueous ammonia solution, and the ion-exchanged water contained in the polymerization-initiator-containing aqueous solution; used, and properties of the water-soluble or water-dispersible acrylic resin (B).

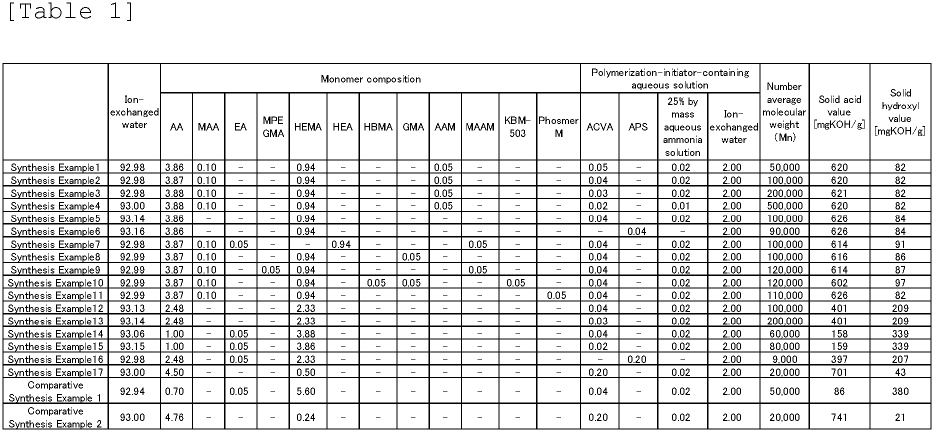

Definitions of the abbreviations in Table 1 are as follows.
AA: Acrylic acid
MAA: Methacrylic acid
EA: Ethyl acrylate
MPEGMA: Methoxypolyethylene glycol methacrylate (NK Ester
M230G, manufactured by Kyoeisha Chemical Co., Ltd.)
HEMA: 2-Hydroxyethyl methacrylate
HEA: 2-Hydroxyethyl acrylate
HBMA: 2-Hydroxybutyl methacrylate
GMA: Glycidyl methacrylate
AAM: Acrylamide
MAAM: n-Methylol acrylamide
KBM-503: 3-Methacryloyloxypropyltrimethoxysilane (manufactured by Shin-Etsu Chemical Co., Ltd.)
Phosmer M: Acid phosphoxyethyl methacrylate (manufactured by Unichemical Co., Ltd.)
ACVA: 4,4'-Azobis(4-cyanovaleric acid)
APS: Ammonium peroxodisulfate

The 25% by mass aqueous ammonia solution contained in the polymerization-initiator-containing aqueous solution was used to neutralize carboxyl groups in ACVA and dissolve the ACVA in water.

### [Synthesis Example 18]

By the following method, a polyacrylic acid was modified to synthesize a water-soluble or water-dispersible acrylic resin (B) using, as a raw material, Jurymer AC-10L (manufactured by Toagosei Co., Ltd.), which is an aqueous solution of the polyacrylic acid (solid acid value: 779 mg KOH/g) (resin solid content: 40% by mass).

To a flask equipped with a heater and a stirrer, 50 parts by mass of ion-exchanged water and 12.5 parts by mass of Jurymer AC-10L (manufactured by Toagosei Co., Ltd.) were added, and the resulting mixture was heated to 80°C with stirring. Subsequently, while heating and stirring were carried out, 1.4 parts by mass of polyglycerol polyglycidyl ether (manufactured by Nagase ChemteX Corporation) was added dropwise thereto for 1 hour using a dropping funnel, and then the heating and stirring were continued for 2 hours. Subsequently, the heating was stopped, and then the polymerization solution was cooled to 30°C with stirring. Subsequently, 200-mesh filtration was carried out to obtain a water-soluble or water-dispersible acrylic resin (B). The water-soluble or water-dispersible acrylic resin (B) of Synthesis Example 18 was water-soluble, and had a number average molecular weight of 32,000, a solid acid value of 521 mg KOH/g, a solid hydroxyl value of 87 mg KOH/g, and a pH of the aqueous solution of 3.

### [Synthesis Example 19]

A water-soluble or water-dispersible acrylic resin (B) was obtained by synthesis by the same method as in Synthesis Example 18 except that 1.8 parts by mass of sorbitol polyglycidyl ether was used instead of 1.4 parts by mass of polyglycerol polyglycidyl ether (manufactured by Nagase ChemteX Corporation). The water-soluble or water-dispersible acrylic resin (B) of Synthesis Example 19 was water-soluble, and had a number average molecular weight of 34,000, a solid acid value of 486 mg KOH/g, a solid hydroxyl value of 86 mg KOH/g, and a pH of the aqueous solution of 3.

### [Synthesis Example 20]

A water-soluble or water-dispersible acrylic resin (B) was obtained by synthesis by the same method as in Synthesis Example 18 except that 2.9 parts by mass of 3-glycidyloxypropyltrimethoxysilane (manufactured by Shin-Etsu Chemical Co., Ltd.) was used instead of 1.4 parts by mass of polyglycerol polyglycidyl ether (manufactured by Nagase ChemteX Corporation). The water-soluble or water-dispersible acrylic resin (B) of Synthesis Example 20 was water-soluble, and had a number average molecular weight of 40,000, a solid acid value of 406 mg KOH/g, a solid hydroxyl value of 348 mg KOH/g, and a pH of the aqueous solution of 3.

### [Examples 1 to 40, Comparative Examples 1 to 7]

Ion-exchange water, a trivalent chromium compound (A), a water-soluble or water-dispersible acrylic resin (B), an organic chelating agent (C), and a cross-linking agent (D) were mixed together to obtain an aqueous surface treatment agent.

Table 2 shows the types and the contents of the trivalent chromium compound (A), the water-soluble or water-dispersible acrylic resin (B), the organic chelating agent (C), and the cross-linking agent (D).

**[Table 2]**

| | Trivalent chromium compound (A) | | Water-soluble or water-dispersible acrylic resin (B) | | X/Y | Organic chelating agent (C) | | Cross-linking agent (D) | | Storage stability |
|---|---|---|---|---|---|---|---|---|---|---|
| | Type | Trivalent chromium content X [ppm by mass] | Type | Solid content Y [ppm by mass] | | Type | Solid content [ppm by mass] | Type | Solid content [ppm by mass] | |
| Example 1 | Chromium fluoride (III) | 2400 | Synthesis Example 1 | 5400 | 0.44 | - | - | - | - | 3 |
| Example 2 | Chromium fluoride (III) | 800 | Svnthesis Example 2 | 12000 | 0.07 | - | - | - | - | 3 |
| Example 3 | Chromium fluoride (III) | 3600 | Synthesis Example 3 | 1300 | 2.77 | - | - | - | - | 3 |
| Example 4 | Chromium fluoride (III) | 2400 | Svnthesis Example 3 | 5400 | 0.44 | PDTA | 2400 | - | - | 5 |
| Example 5 | Chromium fluoride (III) | 1200 | Synthesis Example 3 | 9600 | 0.13 | - | - | - | - | 3 |
| Example 6 | Chromium fluoride (III) | 3000 | Svnthesis Example 4 | 8000 | 0.38 | - | - | - | - | 2 |
| Example 7 | Chromium fluoride (III) | 3000 | Svnthesis Example 5 | 2700 | 1.11 | - | - | - | - | 3 |
| Example 8 | Chromium fluoride (III) | 4200 | Svnthesis Example 5 | 2700 | 1.56 | - | - | - | - | 3 |
| Example 9 | Chromium fluoride (III) | 3600 | Svnthesis Example 5 | 2700 | 1.33 | IP6 | 1500 | - | - | 5 |
| Example 10 | Chromium fluoride (III) | 12000 | Svnthesis Example 5 | 5400 | 2.22 | - | - | - | - | 3 |
| Example 11 | Chromium fluoride (III) | 3300 | Svnthesis Example 5 | 1300 | 2.54 | PDTA | 1500 | - | - | 5 |
| Example 12 | Chromium fluoride (III) | 3000 | Svnthesis Example 6 | 2700 | 1.11 | EDTA | 1500 | - | - | 5 |
| Example 13 | Chromium fluoride (III) | 1200 | Svnthesis Example 6 | 10000 | 0.12 | - | - | - | - | 3 |
| Example 14 | Chromium fluoride (III) | 2000 | Svnthesis Example 6 | 10000 | 0.20 | - | - | - | - | 3 |
| Example 15 | Chromium fluoride (III) | 2700 | Svnthesis Example 7 | 2700 | 1.00 | - | - | - | - | 3 |
| Example 16 | Chromium fluoride (III) | 2600 | Svnthesis Examole 8 | 1300 | 200 | - | - | - | - | 3 |
| Example 17 | Chromium fluoride (III) | 3000 | Svnthesis Example 9 | 4000 | 0.75 | - | - | - | - | 3 |
| Example 18 | Chromium fluoride (III) | 4200 | Svnthesis Example 10 | 4200 | 1.00 | - | - | - | - | 3 |
| Example 19 | Chromium fluoride (III) | 4200 | Svnthesis Example 11 | 2700 | 1.56 | - | - | - | - | 3 |
| Example 20 | Chromium fluoride (III) | 3000 | Synthesis Example 12 | 1300 | 2.31 | EDPMT | 1500 | - | - | 5 |
| Example 21 | Chromium fluoride (III) | 3600 | Svnthesis Example 13 | 1300 | 2.77 | EDTA | 1600 | - | - | 5 |
| Example 22 | Chromium fluoride (III) | 1200 | Synthesis Example 14 | 10000 | 0.12 | - | - | - | - | 3 |
| Example 23 | Chromium fluoride (III) | 4500 | Svnthesis Example 15 | 2700 | 1.67 | EDPMT | 3000 | - | - | 5 |
| Example 24 | Chromium fluoride (III) | 2700 | Synthesis Example 16 | 2700 | 1.00 | - | - | - | - | 3 |
| Example 25 | Chromium fluoride (III) | 3000 | Svnthesis Example 17 | 2700 | 1.11 | - | - | - | - | 3 |
| Example 26 | Chromium nitrate (III) | 2400 | Synthesis Example 3 | 5400 | 0.44 | - | - | - | - | 3 |
| Examole 27 | Chromium nitrate (III) | 3300 | Svnthesis Example 5 | 1300 | 2.54 | - | - | - | - | 3 |
| Examole 28 | Chromium nitrate (III) | 4200 | Synthesis Example 6 | 4200 | 1.00 | - | - | - | - | 3 |
| Example 29 | Chromium ohosohate (III) | 3300 | Svnthesis Example 6 | 2700 | 1.22 | - | - | - | - | 3 |
| Example 30 | Chromium ohosohate (III) | 2700 | Synthesis Example 10 | 1300 | 2.08 | - | - | - | - | 3 |
| Example 31 | Chromium fluoride (III) | 3000 | Svnthesis Example 9 | 5400 | 0.56 | - | - | - | - | 3 |
| Example 32 | Chromium fluoride (III) | 4200 | Synthesis Example 10 | 2700 | 1.56 | - | - | - | - | 3 |
| Example 33 | Chromium fluoride (III) | 3000 | Svnthesis Example 5 | 2400 | 1.25 | PBTC | 2000 | - | - | 5 |
| Example 34 | Chromium fluoride (III) | 2400 | Synthesis Example 1 | 5400 | 0.44 | HEDP | 1000 | - | - | 5 |
| Examole 35 | Chromium fluoride (III) | 2400 | Svnthesis Example 3 | 5400 | 0.44 | TEA | 1000 | - | - | 5 |
| Examole 36 | Chromium fluoride (III) | 3000 | Synthesis Example 18 | 2700 | 1.11 | - | - | - | - | 3 |
| Examole 37 | Chromium fluoride (III) | 4200 | Svnthesis Example 19 | 2700 | 1.56 | - | - | - | - | 3 |
| Example 38 | Chromium fluoride (III) | 8000 | Svnthesis Example 20 | 3000 | 2.67 | - | - | - | - | 3 |
| Example 39 | Chromium fluoride (III) | 4200 | Svnthesis Example 6 | 4200 | 1.00 | - | - | EP1 | 200 | 3 |
| Example 40 | Chromium fluoride (III) | 4200 | Svnthesis Example 6 | 4200 | 1.00 | - | - | EP2 | 200 | 3 |
| Comparative Example 1 | Chromium fluoride (III) | 300 | Synthesis Example 5 | 15000 | 0.02 | - | - | - | - | 3 |
| Comparative Example 2 | - | 0 | Synthesis Example 3 | 10000 | 0 | - | - | - | - | |
| Comparative Example 3 | Chromium fluoride (III) | 3800 | Synthesis Example 6 | 900 | 422 | - | - | - | - | 3 |
| Comparative Example 4 | Chromium fluoride (III) | 2700 | Comparative Synthesis Example 1 | 2700 | 1.00 | - | - | - | - | 3 |
| Comparative Example 5 | Chromium fluoride (III) | 2700 | Comparative Synthesis Example 2 | 2700 | 1.00 | - | - | - | - | 1 |
| Comparative Example 6 | Chromium fluoride (III) | 2700 | PAA | 2700 | 1.00 | - | - | - | - | |
| Comparative Example 7 | Chromium fluoride (III) | 2700 | PVA | 2700 | 1.00 | - | - | - | - | |

Definitions of the abbreviations in Table 2 are as follows.
PDTA: 1,3-Propanediaminetetetraacetic acid
EDTA: Ethylenediaminetetraacetic acid
EDPMT: Ethylenediaminetetramethylene phosphonic acid
IP6: Phytic acid
PBTC: 2-Phosphonobutane-1,2,4-tricarboxylic acid
HEDP: 1-Hydroxyethylidene-1,1-diphosphonic acid
TEA: Triethanolamine
PAA: Polyacrylic acid; Jurymer AC-10L (manufactured by Toagosei Co., Ltd.)
PVA: Polyvinyl alcohol; Kuraray Poval 105MC (manufactured by Kuraray Co., Ltd.)
EP1: Sorbitol polyglycidyl ether (manufactured by Nagase ChemteX Corporation)
EP2: Polyglycerol polyglycidyl ether (manufactured by Nagase ChemteX Corporation)

### (Storage Stability)

One hundred milliliter of an aqueous surface treatment agent was placed in a PP bottle with a lid, and stored at room temperature. The time required for gelling or precipitation of the aqueous surface treatment agent to occur was evaluated according to the following ranks.
1: Gelling or precipitation of the aqueous surface treatment agent occurs in less than 1 day after the production.
2: Gelling or precipitation of the aqueous surface treatment agent occurs during the period from 1 day to less than 7 days after the production.
3: Gelling or precipitation of the aqueous surface treatment agent occurs during the period from 7 days to less than 30 days after the production.
4: Gelling or precipitation of the aqueous surface treatment agent occurs during the period from 30 days to less than 180 days after the production.
5: No gelling or precipitation of the aqueous surface treatment agent occurs even 180 days after the production.

### [Primary Rustproofing (Formation of Coating Film)]

A metal plate having a plate thickness of 40 um (see Table 3) was subjected to surface treatment with an aqueous surface treatment agent, to form a coating film. More specifically, a metal plate was degreased for 3 seconds at 65°C using 2% by mass dilution of Surfcleaner 330 (manufactured by Nippon Paint Surf Chemicals Co., Ltd.). Subsequently, an aqueous surface treatment agent was applied to the plate using a bar coater (No. 6), and then dried using a hot-air oven at a material temperature of not less than 190°C for 2 minutes.

### [Lamination Method 1]

The metal plate having the coating film formed thereon was laminated. More specifically, a two-component polyurethane adhesive as a solvent-based adhesive was applied onto the coating film formed on the surface of the metal plate, such that the amount of the adhesive applied was 3 g/m² after drying. The adhesive was then dried to form an adhesive layer. Subsequently, under conditions at 100°C at 0.38 MPa, a polypropylene film was heat-pressed onto the metal plate having the adhesive layer formed thereon, followed by aging at 60°C for 6 days.

### [Lamination Method 2]

The metal plate having the coating film formed thereon was laminated. More specifically, a maleic acid-modified polypropylene dispersion as an adhesive was applied onto the coating film formed on the surface of the metal plate, such that the amount of the adhesive applied was 3 g/m² after drying. The adhesive was then dried to form an adhesive layer. Subsequently, under conditions at 190°C at 0.38 MPa, a polypropylene film was heat-pressed onto the metal plate having the adhesive layer formed thereon.

### [Adhesion of Laminate Film]

The laminated metal plate was cut into a size of 150 mm × 15 mm to obtain a test piece. Subsequently, using a tabletop precision universal tester Autograph AGS-5KNX (manufactured by Shimadzu Corporation), the peel strength upon peeling of the polypropylene film from the test-piece metal plate at a peeling speed of 50 mm/minute at an angle of 180°C was measured to evaluate the adhesion of the laminate film.

### [Electrolyte Resistance]

To the electrolyte LBG-00015 (manufactured by Kishida Chemical Co., Ltd.), which is a solution containing 1M LiPF₆ in a mixed solvent of ethylene carbonate / dimethyl carbonate / diethyl carbonate (volume ratio, 1/1/1), 1,000 ppm of ion-exchanged water was added to obtain a test electrolyte.

The test piece was immersed in the test electrolyte at 85°C for 14 days, and then the peel strength was measured in the same manner as described above to evaluate the electrolyte resistance.

Table 3 shows evaluation results on the adhesion of the laminate film of, and the electrolyte resistance of, the laminated metal plate.

**[Table 3]**

| | Metal plate | Peel strength [N/15mm] | | | |
|---|---|---|---|---|---|
| | | Lamination Method 1 | | Lamination Method 2 | |
| | | Adhesion | Electrolyte resistance | Adhesion | Electrolyte resistance |
| Example 1 | Al plate | 17 | 14 | 10 | 10 |
| Example 2 | Al plate | 16 | 9 | 10 | 8 |
| Example 3 | Al plate | 17 | 8 | 10 | 8 |
| Example 4 | Al plate | 17 | 14 | 10 | 10 |
| Example 5 | Al plate | 17 | 14 | 10 | 10 |
| Example 6 | Al plate | 16 | 14 | 10 | 10 |
| Example 7 | Al plate | 17 | 15 | 11 | 10 |
| Example 8 | Al plate | 17 | 14 | 11 | 10 |
| Example 9 | Al plate | 17 | 15 | 11 | 10 |
| Example 10 | Al plate | 17 | 14 | 11 | 10 |
| Example 11 | SUS plate | 17 | 14 | 11 | 10 |
| Example 12 | Al plate | 17 | 14 | 10 | 10 |
| Example 13 | SUS plate | 16 | 16 | 10 | 10 |
| Example 14 | Ni-plated steel plate | 16 | 14 | 9 | 8 |
| Example 15 | Al plate | 17 | 15 | 10 | 9 |
| Example 16 | Al plate | 16 | 14 | 10 | 10 |
| Example 17 | Al plate | 15 | 14 | 10 | 10 |
| Example 18 | Al plate | 16 | 15 | 10 | 10 |
| Example 19 | Al plate | 17 | 14 | 11 | 10 |
| Example 20 | Al plate | 17 | 14 | 11 | 10 |
| Example 21 | Al plate | 16 | 9 | 11 | 8 |
| Example 22 | Al plate | 17 | 14 | 10 | 9 |
| Example 23 | Al plate | 16 | 14 | 10 | 10 |
| Example 24 | Al plate | 17 | 14 | 10 | 10 |
| Example 25 | Al plate | 17 | 14 | 10 | 10 |
| Example 26 | Al plate | 16 | 14 | 10 | 9 |
| Example 27 | Al plate | 17 | 15 | 10 | 9 |
| Example 28 | Ni-plated steel plate | 16 | 14 | 10 | 9 |
| Example 29 | Al plate | 17 | 14 | 10 | 10 |
| Example 30 | SUS plate | 17 | 14 | 10 | 10 |
| Example 31 | Ni-plated Cu plate | 16 | 15 | 10 | 10 |
| Example 32 | EG plate | 16 | 14 | 10 | 9 |
| Example 33 | Al plate | 17 | 15 | 11 | 10 |
| Example 34 | Al plate | 17 | 14 | 10 | 10 |
| Example 35 | Al plate | 16 | 14 | 10 | 10 |
| Example 36 | Al plate | 16 | 14 | 10 | 9 |
| Example 37 | Al plate | 17 | 15 | 10 | 9 |
| Example 3B | Al plate | 16 | 14 | 9 | 8 |
| Example 39 | Al plate | 17 | 15 | 11 | 10 |
| Example 40 | Al plate | 17 | 15 | 11 | 10 |
| Comparative Example 1 | Al plate | 17 | 0(Peeled) | 10 | 1 |
| Comparative Example 2 | Al plate | 14 | 0(Peeled) | 10 | 0(Peeled) |
| Comparative Example 3 | Al plate | 16 | 1 | 10 | 1 |
| Comparative Example 4 | Al plate | 16 | 1 | 9 | 1 |
| Comparative Example 5 | Al plate | 16 | 1 | 9 | 1 |
| Comparative Example 6 | Al plate | 17 | 0(Peeled) | 9 | 0(Peeled) |
| Comparative Example 7 | Al plate | 16 | 1 | 9 | 0(Peeled) |

Definitions of the abbreviations in Table 3 are as follows.
Al plate: Aluminum alloy plate (8079 material)
SUS plate: Stainless steel plate (SUS304)
Ni-plated steel plate: Nickel-plated steel plate (base material: SPCC)
Ni-plated Cu plate: Nickel-plated copper plate
EG plate: Electrogalvanized steel plate (base material: SPCC) From Table 3, it can be seen that surface treatment of the metal plate with each of the aqueous surface treatment agents of Examples 1 to 40 led to excellent adhesion of the laminate film of, and high electrolyte resistance of, the laminated metal plate.

In contrast, each of the aqueous surface treatment agents of Comparative Examples 1 to 3 led to low electrolyte resistance of the laminated metal plate since the agents have X/Y values of 0.02, 0, and 4.22, respectively. The aqueous surface treatment agent of Comparative Example 4 led to low electrolyte resistance of the laminated metal plate since the agent contains a water-soluble or water-dispersible acrylic resin (B) having a solid acid value of 86 mg KOH/g and a solid hydroxyl value of 380 mg KOH/g. The aqueous surface treatment agent of Comparative Example 5 led to low electrolyte resistance of the laminated metal plate since the agent contains a water-soluble or water-dispersible acrylic resin (B) having a solid acid value of 741 mg KOH/g and a solid hydroxyl value of 21 mg KOH/g. Each of the aqueous surface treatment agents of Comparative Examples 6 and 7 led to low electrolyte resistance of the laminated metal plate since the agents contain a polyacrylic acid containing no hydroxyl group or a polyvinyl alcohol containing no carboxyl group, respectively.

## Claims

1. An aqueous surface treatment agent for use in surface treatment of a metal,
the agent comprising: a trivalent chromium compound (A); and a water-soluble or water-dispersible acrylic resin (B),
the water-soluble or water-dispersible acrylic resin (B) having a solid acid value of 150 mg KOH/g or more and 740 mg KOH/g or less and a solid hydroxyl value of 24 mg KOH/g or more and 350 mg KOH/g or less,
the ratio of the mass of the trivalent chromium contained in the trivalent chromium compound (A) to the mass of the solid content of the water-soluble or water-dispersible acrylic resin (B) being 0.07 or more and 2.8 or less.

2. The aqueous surface treatment agent according to claim 1, wherein the water-soluble or water-dispersible acrylic resin (B) is a copolymer obtained by copolymerizing monomers containing one or more functional groups selected from the group consisting of a glycidyl group, an amide group, an alkoxysilyl group, and a phosphate group.

3. The aqueous surface treatment agent according to claim 1 or 2, further comprising an organic chelating agent (C).

4. The aqueous surface treatment agent according to claim 3, wherein the organic chelating agent (C) contains one or more functional groups selected from the group consisting of a hydroxyl group, a carboxyl group, a phosphonate group, a phosphate group, and an amino group.

5. A surface-treated metal comprising: a metal and a coating film formed by surface treatment of the metal using the aqueous surface treatment agent according to any one of claims 1 to 4.

6. The surface-treated metal according to claim 5, wherein the metal is aluminum or an aluminum alloy, iron or an iron alloy, or copper or a copper alloy.

7. The surface-treated metal according to claim 5 or 6, wherein the metal is plated.

8. The surface-treated metal according to any one of claims 5 to 7, wherein the metal having the coating film is laminated.

9. The surface-treated metal according to claim 8, which is an exterior material for a battery.
